# EUROPEAN PATENT APPLICATION

(11) **EP 2 514 618 A2**
(43) Date of publication of application: **24.10.2012**
(21) Application number: 12164939.6
(22) Date of filing: 20.04.2012
(51) Int. Cl.: B60J 7/00

(54) **Sheet winding apparatus for vehicle**

(30) Priority: 22.04.2011 JP 2011096173
(71) Applicant: AISIN SEIKI KABUSHIKI KAISHA, Kariya-shi, Aichi-ken 448-8650 (JP)
(72) Inventor: Kitani, Takashi, Kariya-shi, Aichi-ken,, 448-8650 (JP); Nakamura, Yoshitaka, Kariya-shi, Aichi-ken,, 448-8650 (JP); Matsushita, Jun, Kariya-shi, Aichi-ken,, 448-0027 (JP)
(74) Representative: Winter, Brandl, Fürniss, Hübner, Röss, Kaiser, Polte - Partnerschaft

(57) **Abstract**

A sheet winding apparatus for a vehicle includes a fixed shaft (24), a winding shaft (26) rotatably supported at the fixed shaft, the winding shaft including a winding shaft-side fitting portion (26a), a sheet (21) whose end portion is fixed to the winding shaft, a supporting member (27) inserted into the winding shaft, a torsion spring (28) including a coil portion (28a) and biasing the winding shaft in a winding-up direction of the sheet, a soundproof tube (29), a supporting member-side fitting portion (27a) formed at the supporting member and engaging with the winding shaft-side fitting portion, a tube-side fitting portion (29a) formed at the soundproof tube and engaging with the winding shaft-side fitting portion, a holding portion (27d) formed at the supporting member and protruding in an axial direction of the supporting member, and a position-setting portion (29b) provided at the soundproof tube and sandwiched and held by the coil portion and the holding portion.

## Description

### TECHNICAL FIELD

This disclosure generally relates to a sheet winding apparatus for a vehicle.

### BACKGROUND DISCUSSION

A known sheet winding apparatus for a vehicle is disclosed in JP2004-250225A (hereinafter referred to as Patent reference 1). The known sheet winding apparatus for the vehicle disclosed in the Patent reference 1 includes a fixed shaft, a winding shaft formed into a hollow cylindrical shape and rotatably supported at the fixed shaft, a sheet whose one end is secured to an outer peripheral portion of the winding shaft, and a torsion spring inserted between an outer peripheral surface of the fixed shaft and an inner peripheral surface of the winding shaft and biasing the winding shaft in a direction in which the sheet is wound up. The known sheet winding apparatus for the vehicle disclosed in the Patent reference 1 also includes a first soundproof tube which is provided with plural contacting protrusions contactable with an inner peripheral portion of the torsion spring and which is mounted on the outer peripheral surface of the fixed shaft. The known sheet winding apparatus for the vehicle disclosed in the Patent reference 1 also includes a second soundproof tube which is provided with plural contacting protrusions contactable with an outer peripheral portion of the torsion spring and which is mounted on the inner peripheral surface of the winding shaft. Thus, in a case where, for example, the torsion spring is torsionally deformed, the plural protrusions provided at the first soundproof tube or at the second soundproof tube, with which the torsion spring, for example, collides, are elastically deformed, and thus occurrence of abnormal noises is restricted.

According to the known sheet winding apparatus for the vehicle disclosed in the Patent reference 1, one of leg portions of the torsion spring is locked at a free end of the fixed shaft, and the other one of the leg portions of the torsion spring is locked at a supporting member that is fixed to the winding shaft so as to be integrally rotatable with the winding shaft. Anti-rotation locking of the supporting member relative to the winding shaft is achieved by a caulking process. Because the caulking process is included in a manufacturing process, manufacturing costs increase. Alternatively, strength of the winding shaft decreases as a result of performing the caulking.

An outer peripheral surface of the second soundproof tube is closely fitted to the inner peripheral surface of the winding shaft and an end portion of the second soundproof tube is tightly inserted between an outer peripheral surface of a bearing member that is fixed to the winding shaft so as to be integrally rotatable with the winding shaft and the inner peripheral surface of the winding shaft, and thus the rotation of the second soundproof tube relative to the winding shaft is locked. However, for example, the winding shaft and the second soundproof tube are fitted to each other by means of the fitting between the peripheral surfaces of the winding shaft and the second soundproof tube. Thus, anti-rotation locking of the second soundproof tube relative to the winding shaft may be insufficient.

A need thus exists for a sheet winding apparatus for a vehicle, where an increase in manufacturing load is restricted, and where a rotation of a soundproof tube, which is interposed between an inner peripheral portion of a winding shaft and an outer peripheral portion of a torsion spring, relative to the winding shaft is more reliably locked, is provided.

### SUMMARY

According to an aspect of this disclosure, a sheet winding apparatus for a vehicle includes a fixed shaft, a winding shaft formed into a tubular shape and rotatably supported at the fixed shaft, the winding shaft including a winding shaft-side fitting portion provided at an inner peripheral portion of the winding shaft and extending in an axial direction of the winding shaft, a sheet whose end portion is fixed to the winding shaft, a supporting member inserted into the winding shaft, a torsion spring including a coil portion inserted in the winding shaft between the fixed shaft and the supporting member in the axial direction of the winding shaft, the torsion spring includes leg portions engaged with the fixed shaft and with the supporting member respectively and biases the winding shaft in a winding-up direction of the sheet, a soundproof tube placed between the inner peripheral portion of the winding shaft and an outer peripheral portion of the coil portion, a supporting member-side fitting portion formed at the supporting member and engaging with the winding shaft-side fitting portion, thereby locking a rotation of the supporting member relative to the winding shaft, a tube-side fitting portion formed at the soundproof tube and engaging with the winding shaft-side fitting portion, thereby locking a rotation of the soundproof tube relative to the winding shaft, a holding portion formed at the supporting member and protruding in an axial direction of the supporting member in a direction of the torsion spring, and a position-setting portion provided at the soundproof tube in a predetermined range in a circumferential direction of the soundproof tube in a protruding manner in an axial direction of the soundproof tube in a manner that the position-setting portion faces the supporting member, the position-setting portion is folded back in the axial direction of the soundproof tube inwardly and covers an edge portion of the coil portion, the position-setting portion is sandwiched and held by the coil portion and the holding portion.

According to the above-described structure, the rotation of the supporting member relative to the winding shaft is locked by means of the engagement of the winding shaft-side fitting portion and the supporting member-side fitting portion. This eliminates the need of, for example, a caulking process, and thus reduces manufacturing workload or restricts a reduction in a strength of the winding shaft which may be caused by the caulking process. On the other hand, the rotation of the soundproof tube relative to the winding shaft is reliably locked because the winding shaft-side fitting portion engages with the tube-side fitting portion, and because the position-setting portion is sandwiched and held between the coil portion and the holding portion of the supporting member. In addition, the soundproof tube is locked from moving in the axial direction in the direction closer to the fixed shaft because the position-setting portion is sandwiched and held between the coil portion and the holding portion. Thus, for example, in a temporarily assembled state where the outer peripheral portion of the torsion spring, whose leg portions are engaged at the fixed shaft and at the supporting member, is inserted into the soundproof tube, when the supporting member and other temporarily assembled parts are inserted and fitted into the winding shaft, it is restricted that the soundproof tube is positionally offset in the axial direction due to deformation of the torsion spring caused by expansion and contraction thereof. Consequently, assemblability improves. It is restricted that the soundproof tube is positionally offset in the axial direction due to a rotation of the winding shaft or due to the deformation of the torsion spring, and thereby it is restricted that the soundproof tube is caught in and rolled in the fixed shaft. Consequently, it is restricted that, for example, the winding shaft becomes unable to rotate.

According to the above-described structure, the sheet winding apparatus for the vehicle, where an increase in the manufacturing load is restricted, and where the rotation of the soundproof tube, which is interposed between the inner peripheral portion of the winding shaft and the outer peripheral portion of the torsion spring, relative to the winding shaft is more reliably locked, is provided.

According to another aspect of this disclosure, the sheet winding apparatus for the vehicle further includes a protrusion protrudingly provided at an outer peripheral portion of the soundproof tube and being elastically in contact with the inner peripheral portion of the winding shaft, the protrusion is provided at other portion of the outer peripheral portion of the soundproof tube than the tube-side fitting portion.

According to the above-described structure, for example, when the supporting member and the soundproof tube are inserted and fitted into the winding shaft in the temporarily assembled state where the outer peripheral portion of the torsion spring, whose leg portions are engaged at the fixed shaft and at the supporting member, is inserted into the soundproof tube, the protrusion comes to be elastically in contact with the inner peripheral portion of the winding shaft. Thus, a sliding resistance while the soundproof tube is being inserted and fitted into the winding shaft is reduced compared to a case where, for example, an entire outer peripheral portion of the soundproof tube is in contact with the inner peripheral portion of the winding shaft. Consequently, the assemblability improves.

According to a further aspect of this disclosure, the sheet winding apparatus for the vehicle further includes a guiding groove provided at an inner peripheral portion of the soundproof tube and extending in the axial direction of the soundproof tube, the guiding groove is provided at least one of a first angular position positioned at a central portion of the position-setting portion in the circumferential direction of the soundproof tube and a second angular position facing the first angular position in a radial direction of the soundproof tube.

According to the above-described structure, in order to cut a protruding configuration, which protrudes from the soundproof tube in the axial direction and defines or forms the position-setting portion, out of an extrusion molding material from which the soundproof tube is made, the protruding configuration is cut out in a state where the extrusion molding material is folded along the guiding groove. Accordingly, the protruding configuration is easily defined or formed without causing a positional offset, in the circumferential direction of the soundproof tube, of a range (the angular position) at which the protruding configuration (the position-setting portion) is to be formed.

According to a further aspect of this disclosure, the holding portion includes a guide portion of which protruding length in an axial direction of the guide portion toward the torsion spring gradually decreases toward a rotational direction in which the guide portion rotates about an engaging position of the leg portion of the torsion spring and the supporting member to move away from the position-setting portion.

According to the above-described structure, for example, in the temporarily assembled state where the outer peripheral portion of the torsion spring is inserted into the soundproof tube, the corresponding leg portion of the torsion spring is engaged at the supporting member in a manner that a portion of the guide portion, the portion whose protruding length is smaller, comes closer to the protruding configuration that protrudes from the soundproof tube in the axial direction for forming the position-setting portion. While maintaining the above-explained state, the supporting member is rotated about the engaging position of the corresponding leg portion of the torsion spring and the supporting member in the rotational direction in which the guide portion rotates about the engaging position of the corresponding leg portion and the supporting member so as to move away from the position-setting portion, and thus the protruding configuration positioned on a rotational path of the holding portion is guided by the guide portion and comes to be gradually folded inwardly back in the axial direction. As the supporting member rotates, the holding portion comes to be inserted into the coil portion, and thereby the protruding configuration folded back in the axial direction comes to be sandwiched and held between the coil portion and the holding portion. Accordingly, the position-setting portion is defined or formed from the protruding configuration, and is sandwiched and held between the coil portion and the holding portion in a smooth manner.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective view illustrating a vehicle roof to which an embodiment disclosed here is configured to be applied;

Fig. 2 is a perspective view schematically illustrating the embodiment;

Fig. 3A is a longitudinal cross-sectional view illustrating the embodiment;

Fig. 3B is a view seen from an arrowed direction 3B in Fig. 3A;

Fig. 3C is a view seen from an arrowed direction 3C in Fig. 3A;

Fig. 4A is an exploded perspective view illustrating the embodiment;

Fig. 4B is a longitudinal cross-sectional view illustrating the embodiment;

Fig. 5 is a cross-sectional view taken along line V-V in Fig. 4B;

Fig. 6 is a cross-sectional view taken along line VI-VI in Fig. 4B;

Fig. 7 is a cross-sectional view schematically illustrating the embodiment;

Fig. 8 is a longitudinal cross-sectional view illustrating a form of assembly of the embodiment;

Fig. 9A is a view schematically illustrating a manner of forming a protruding configuration of the embodiment; and

Fig. 9B is a view schematically illustrating the manner of forming the protruding configuration of the embodiment.

### DETAILED DESCRIPTION

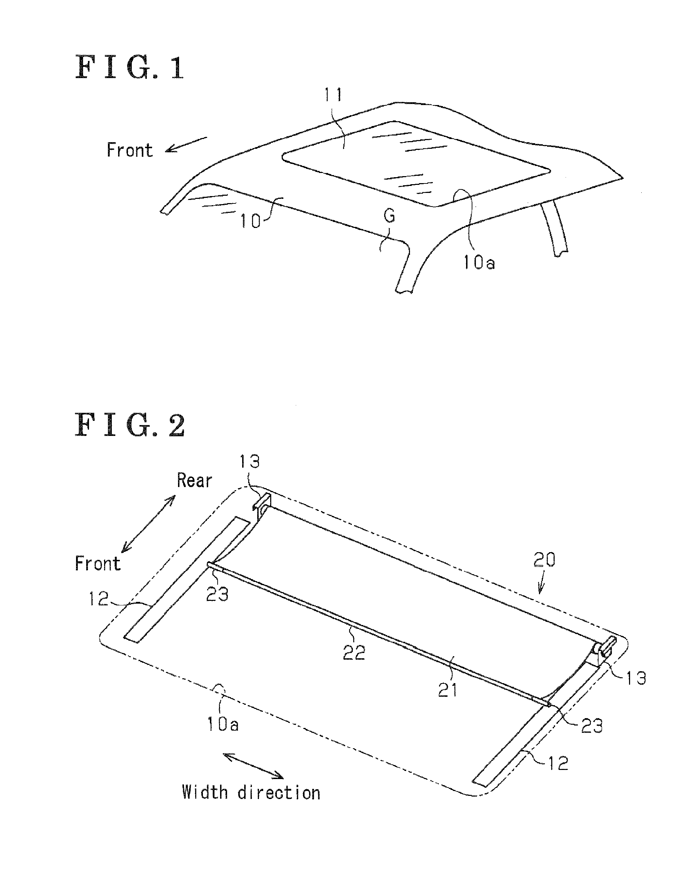

An embodiment of a sheet winding apparatus for a vehicle of this disclosure will be explained with reference to Figs. 1 to 9B. As illustrated in Fig. 1, a vehicle roof 10 of, for example, an automobile is formed with a roof opening portion 10a formed into a substantially rectangular shape and serving as an opening portion. The vehicle roof 10 is also provided with a roof panel 11 made of glass and serving as a light transmitting member defining a light transmitting area at the roof opening portion 10a.

As illustrated in Fig. 2, a pair of guide rails 12 made of, for example, aluminum alloy extrusion extends at the vehicle roof 10, specifically, at edge portions of the vehicle roof 10 in a width direction of the vehicle in a vicinity of the roof opening portion 10a, in a front/rear direction of the vehicle. A bracket 13 made from, for example, metal plate is provided in a standing condition behind each guide rail 12. A sheet winding apparatus 20 is supported at the brackets 13. The sheet winding apparatus 20 includes a sheet 21 for shading and a garnish 22 fixedly attached to an end portion of the sheet 21 and extending in the width direction. The sheet winding apparatus 20 also includes a pair of shoes 23 provided at end portions of the garnish 22 in the width direction so as to protrude in the width direction. The pair of shoes 23 is mounted on the pair of guide rails 12 so as to be movable in the front/rear direction. The garnish 22 and the pair of shoes 23 move in the front direction along the pair of guide rails 12, so that the sheet winding apparatus 20 covers and shades the roof panel 11, while the sheet winding apparatus 20 is winding out the sheet 21. Alternatively, the garnish 22 and the pair of shoes 23 move in the rear direction along the pair of guide rails 12, so that the sheet winding apparatus 20 uncovers the roof panel 11, while winding up the sheet 21. The sheet 21 selectively covers and uncovers the roof panel 11 constituting the light transmitting area of the roof opening portion 10a configured to be provided at the vehicle.

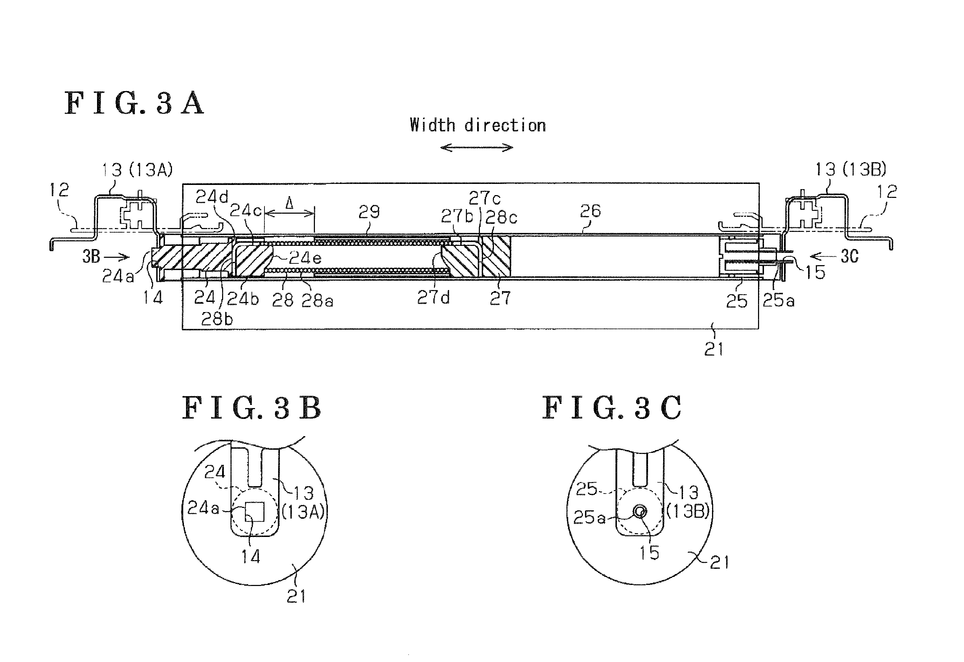

As illustrated in Figs. 3A and 3B, the bracket 13 positioned at one side in the width direction (that is, the left side in Fig. 3A) (hereinafter referred also to as a bracket 13A) is provided with a fitting hole 14 having a substantially rectangular shape and opening in the width direction. A fitting protrusion 24a is fitted into the fitting hole 14. The fitting protrusion 24a has a substantially rectangular columnar shape and is formed at a fixed shaft 24 whose axis line extends in the width direction. Thus, the fixed shaft 24 is supported so as not to rotate relative to the bracket 13A. The fixed shaft 24 includes a bearing portion 24b formed into a substantially cylindrical shape and formed at an inner side end portion of the fixed shaft 24 in the width direction. The fixed shaft 24 also includes a guide groove 24c formed at a predetermined angular position (that is, the upper side in Fig. 3A) of an outer peripheral surface of the bearing portion 24b and extending in an axial direction of the fixed shaft 24. The fixed shaft 24 also includes a locking hole 24d which is a substantially-vertical hole recessed in a radial direction of the fixed shaft 24 and which is connected to an outer side end portion, in the width direction, of the guide groove 24c. The fixed shaft 24 further includes a first spring holding portion 24e formed into a substantially partially-cylindrical shape and provided at a substantially central portion of the bearing portion 24b so as to protrude toward an inner side in the width direction.

On the other hand, as illustrated in Figs. 3A and 3C, the bracket 13 positioned at the other side in the width direction (that is, the right side in Fig. 3A) (hereinafter referred also to as a bracket 13B) is provided with a bearing hole 15 formed into a substantially circular shape and opening in the width direction. A shaft portion 25a having a substantially cylindrical shape, which is provided at a rotating shaft 25 whose axis line extends in the width direction, is inserted into the bearing hole 15. Thus, the rotating shaft 25 is supported so as to be rotatable relative to the bracket 13B.

The bearing portion 24b of the fixed shaft 24 is rotatably inserted into one end portion of a winding shaft 26, whose axis line extends in the width direction, made of aluminum alloy extruded material and having a substantially hollow cylindrical shape. The rotating shaft 25 is fitted into the other end portion of the winding shaft 26 by insertion so as not to rotate relative to the winding shaft 26. Thus, the winding shaft 26 is rotatably supported at the brackets 13, that is, one end portion of the winding shaft 26 is rotatable about the bearing portion 24b of the fixed shaft 24 and the other end portion of the winding shaft 26 is rotatable about the bearing hole 15 via the rotating shaft 25.

One end portion of the sheet 21 is fixedly attached to an outer peripheral portion of the winding shaft 26 and the sheet 21 is wound around the outer peripheral portion of the winding shaft 26. Thus, the sheet 21 is wound out when the winding shaft 26 rotates in one direction (that is, a winding-out direction) and the sheet 21 is wound up when the winding shaft 26 rotates in an opposite direction (that is, a winding-up direction).

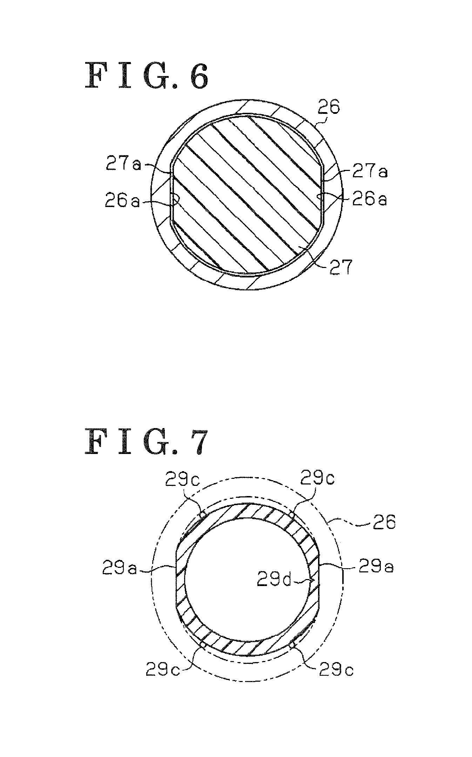

A supporting member 27 which is made of, for example, resin material and is formed into a substantially cylindrical shape is inserted and fitted into the winding shaft 26 at an intermediate portion in an axial direction of the winding shaft 26. Specifically, as illustrated in Fig. 6, a pair of winding shaft-side fitting portions 26a is provided at an inner peripheral portion of the winding shaft 26 so as to extend in the axial direction along an entire length of the winding shaft 26. The winding shaft-side fitting portions 26a, 26a are arranged at angular positions so as to face each other in a radial direction of the winding shaft 26. Each winding shaft-side fitting portion 26a is formed by increasing a thickness of an inner wall surface, which has a substantially circular shape, of the winding shaft 26 so that the winding shaft-side fitting portions 26a, 26a include linear planes that are parallel to the radial direction when viewed in a cross-sectional view. Each winding shaft-side fitting portion 26a defines a planar shape that extends along the axial direction of the winding shaft 26. In other words, the inner wall surface of the winding shaft 26 includes two planes that are parallel to each other, and thus the winding shaft 26 includes a substantially elliptic-shaped cross section. On the other hand, a pair of supporting member-side fitting portions 27a is provided at an outer peripheral portion of the supporting member 27 so as to extend in an axial direction along an entire length of the supporting member 27. The supporting member-side fitting portions 27a, 27a are arranged at angular positions that face the winding shaft-side fitting portions 26a, 26a in a radial direction of the supporting member 27 in a manner that the supporting member-side fitting portions 27a, 27a face each other. Each supporting member-side fitting portion 27a is formed by cutting out a portion of an outer wall surface, which has a substantially circular shape, of the supporting member 27 so that the supporting member-side fitting portions 27a, 27a include linear planes that are parallel to the radial direction when viewed in a cross-sectional view. Each supporting member-side fitting portion 27a defines a planar shape that extends along the axial direction of the supporting member 27. In other words, the outer wall surface of the supporting member 27 includes two planes that are parallel to each other, and thus the supporting member 27 includes a substantially elliptic-shaped cross section. The winding shaft 26 and the supporting member 27 are connected to each other so as to rotate integrally with each other in a manner that the pair of winding shaft-side fitting portions 26a and the pair of supporting member-side fitting portions 27a fit or engage with each other.

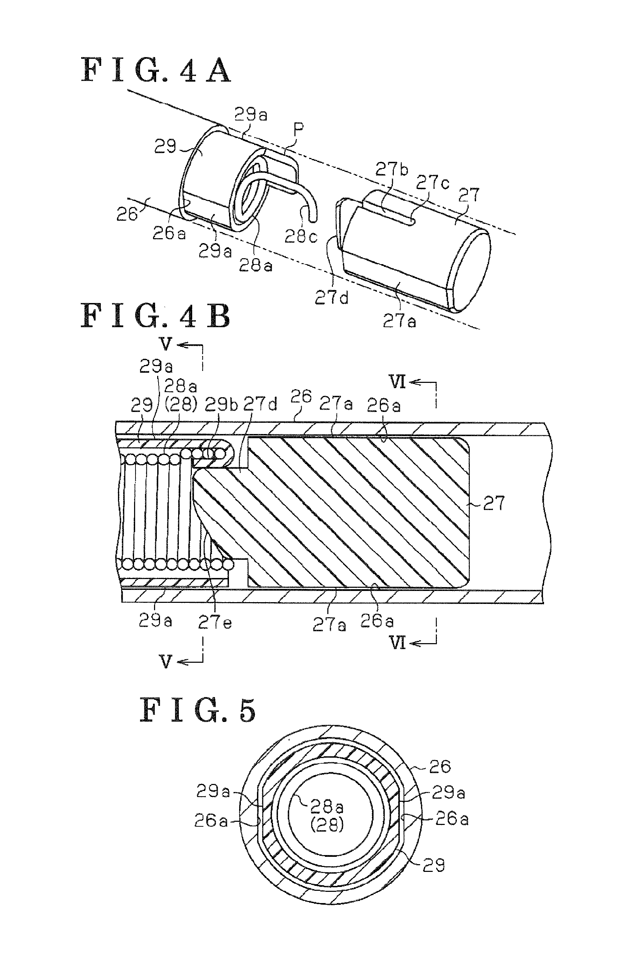

As shown in Figs. 4A and 4B, the supporting member 27 includes a guide groove 27b extending in the axial direction of the supporting member 27 at a predetermined angular position (that is, an angular position corresponding to a center between the pair of supporting member-side fitting portions 27a) of an outer peripheral surface of the supporting member 27. The supporting member 27 also includes a locking hole 27c which is a substantially-vertical hole recessed in the radial direction of the supporting member 27 and which is connected to an inner side end portion, in the width direction, of the supporting member 27. The supporting member 27 further includes a second spring holding portion 27d (i.e., a holding portion) formed into a substantially partially-cylindrical shape and provided at a substantially central portion of the supporting member 27 so as to protrude toward an outer side in the width direction and to face the fixed shaft 24, that is, in the axial direction of the supporting member 27 in a direction of a torsion spring 28 which will be explained later.

As illustrated in Fig. 3A, the torsion spring 28, which is interposed between the fixed shaft 24 and the supporting member 27, is inserted into the winding shaft 26. The torsion spring 28 includes a coil portion 28a sandwiched between the fixed shaft 24 and the supporting member 27. The first spring holding portion 24e and the second spring holding portion 27d are inserted in ends of the coil portion 28a, respectively. The torsion spring 28 also includes a leg portion 28b substantially formed into a shape of a letter L and extending from one end of the coil portion 28a toward the outer side in the width direction, that is, in a direction of the fixed shaft 24, and a leg portion 28c substantially formed into a shape of a letter L and extending from the other end of the coil portion 28a toward the inner side in the width direction, that is, in a direction of the supporting member 27. The ends of the torsion spring 28 are inserted into the first spring holding portion 24e and into the second spring holding portion 27d and are held thereat, respectively. An end of the leg portion 28b that is guided by the guide groove 24c is inserted into the locking hole 24d and is engaged thereat, and an end of the leg portion 28c that is guided by the guide groove 27b is inserted into the locking hole 27c and is engaged thereat. In other words, the torsion spring 28 is secured to the fixed shaft 24 at the leg portion 28b, and is secured to the supporting member 27 at the leg portion 28c. For example, in a case where the torsion spring 28 is in a free state and when the supporting member 27 is rotated together with the winding shaft 26 relative to the fixed shaft 24, a biasing force causing the torsion spring 28 to return to its free state is generated at the torsion spring 28. Basically, the torsion spring 28 is configured to bias the supporting member 27 (the winding shaft 26) in the direction in which the sheet 21 is wound up (that is, the winding-up direction of the sheet 21). Thus, while the winding shaft 26 (the supporting member 27) rotates in the one direction in order to wind out the sheet 21, the biasing force is generated at the torsion spring 28, which causes the torsion spring 28 to return to its free state. Then, when the sheet 21 is released, the winding shaft 26 is biased by the torsion spring 28 and is rotated together with the supporting member 27 in the opposite direction, and thus the sheet 21 is wound up.

A soundproof tube 29, which is made of, for example, extruded molding material and has a hollow, substantially cylindrical shape, is inserted and fitted into the winding shaft 26 to be positioned at an outer peripheral side of the coil portion 28a. Specifically, as illustrated in Fig. 5, a pair of tube-side fitting portions 29a is provided at an outer peripheral portion of the soundproof tube 29 so as to extend in the axial direction along an entire length of the soundproof tube 29. The tube-side fitting portions 29a, 29a are arranged at angular positions of the soundproof tube 29 so as to face the winding shaft-side fitting portions 26a, 26a in the radial direction. Each tube-side fitting portion 29a is formed by cutting out a portion of an outer wall surface, which has a substantially circular shape, of the soundproof tube 29 so that the tube-side fitting portions 29a, 29a include linear planes that are parallel to the radial direction when viewed in a cross-sectional view. Each tube-side fitting portion 29a defines a planar shape that extends along an axial direction of the soundproof tube 29. In other words, the outer wall surface of the soundproof tube 29 includes two planes that are parallel to each other, and thus the soundproof tube 29 includes a substantially elliptic-shaped cross section. The winding shaft 26 and the soundproof tube 29 are connected to each other so as to rotate integrally with each other in a manner that the pair of winding shaft-side fitting portions 26a and the pair of tube-side fitting portions 29a fit or engage with each other.

As illustrated in Figs. 4A and 4B, the soundproof tube 29 interposed between the inner peripheral portion of the winding shaft 26 and an outer peripheral portion of the coil portion 28a includes a position-setting portion 29b defined by folding a protruding configuration P protruding in the axial direction of the soundproof tube 29 along one of the pair of tube-side fitting portions 29a. The protruding configuration P is folded back in the axial direction inwardly so as to cover an edge portion of the coil portion 28a. A rotation of the soundproof tube 29 relative to the winding shaft 26 is locked because the position-setting portion 29b is sandwiched and held between the coil portion 28a and the second spring holding portion 27d, and because the pair of winding shaft-side fitting portions 26a and the pair of tube-side fitting portions 29a engage with each other. In addition, the soundproof tube 29 is prevented from moving in the axial direction of the soundproof tube 29 in a direction closer to the fixed shaft 24 because the position-setting portion 29b is sandwiched and held between the coil portion 28a and the second spring holding portion 27d. As illustrated in Fig. 3A, a clearance Δ is provided between an end of the fixed shaft 24 and an end of the soundproof tube 29 in the axial direction so that interference between the fixed shaft 24 and the soundproof tube 29 is more reliably restricted.

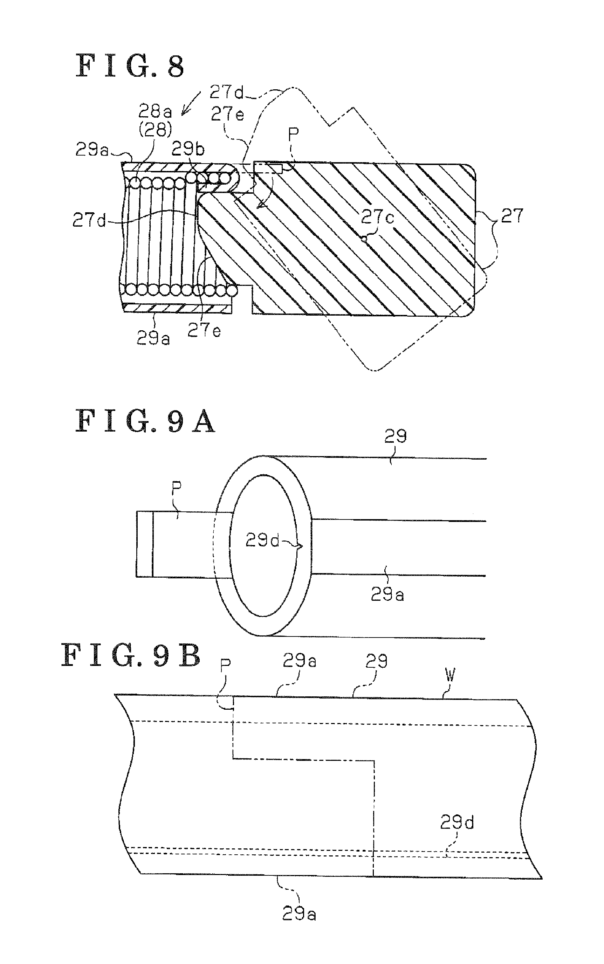

Further, as schematically illustrated in Fig. 7, a protrusion 29c formed into a rib-shape is provided on the outer wall surface of the soundproof tube 29 so as to protrude in the radial direction thereof. Specifically, the pair of protrusions 29c is provided on each of the substantially circular shaped-outer wall surfaces, that is, portions of the outer wall surface which are positioned circumferentially between the pair of tube-side fitting portions 29a, of the soundproof tube 29 so as to be circumferentially symmetrical to each other. Each of the protrusions 29c, which are protrudingly provided at the outer peripheral portion of the soundproof tube 29 except for at the pair of tube-side fitting portions 29a, extends in the axial direction of the soundproof tube 29 along the entire length of the soundproof tube 29 and is elastically in contact with an inner wall surface, which has the substantially circular shape, of the winding shaft 26 which the protrusions 29c face in the radial direction. Further, as illustrated in Fig. 9A, at a circumferentially center of one of the tube-side fitting portions 29a, 29a, that is, the tube-side fitting portion 29a at which the position-setting portion 29b (the protruding configuration P) is not provided, a guiding groove 29d is formed at an inner wall surface, that is, an inner peripheral portion, of the tube-side fitting portion 29a. In other words, the guiding groove 29d is provided at a second angular position that faces a circumferentially central portion of the position-setting portion 29b in the radial direction. The guiding groove 29d extends along the entire length of the soundproof tube 29 in the axial direction. As schematically illustrated in Fig. 9B, in order to cut the protruding configuration P out of an extrusion molding material W from which the soundproof tube 29 is made, the protruding configuration P is cut out in a state where the extrusion molding material W is folded along the guiding groove 29d. Accordingly, the protruding configuration P is easily defined or formed without causing a positional offset of a range in a circumferential direction of the soundproof tube 29, that is, a predetermined range, (the angular position) at which the protruding configuration P (the position-setting portion 29b) is to be formed.

Here, a manner of forming the position-setting portion 29b by folding back the protruding configuration P will be explained. As illustrated in Fig. 8, the second spring holding portion 27d of the supporting member 27 includes a guide portion 27e formed into an inclined configuration whose protruding length in the axial direction of the guide portion 27e toward the torsion spring 28 gradually decreases toward a rotational direction in which the guide portion 27e rotates about an engaging position of the leg portion 28c of the torsion spring 28 and the supporting member 27 (that is, the locking hole 27c) so as to move away from the position-setting portion 29b. In order to assemble the supporting member 27 on the winding shaft 26, in a temporarily assembled state where the outer peripheral portion of the torsion spring 28 (the coil portion 28a) is inserted into the soundproof tube 29, the leg portion 28c of the torsion spring 28 is engaged at the locking hole 27c of the supporting member 27 so that a portion of the guide portion 27e, the portion whose protruding length is smaller, is positioned closer the protruding configuration P. While maintaining the above-explained state, the supporting member 27 is rotated about the engaging position (the locking hole 27c) of the leg portion 28c of the torsion spring 28 and the supporting member 27 in the aforementioned rotational direction, and thus the protruding configuration P positioned on a rotational path of the second spring holding portion 27d is guided by the guide portion 27e and comes to be gradually folded inwardly back in the axial direction. At this time, the protruding configuration P is folded along the edge portion of the coil portion 28a. As the supporting member 27 rotates, the second spring holding portion 27d comes to be inserted into the coil portion 28a, and thereby the protruding configuration P, which serves as the position-setting portion 29b, folded back in the axial direction comes to be sandwiched and held between the coil portion 28a and the second spring holding portion 27d.

In the temporarily assembled state where the outer peripheral portion of the torsion spring 28 (the coil portion 28a), whose leg portions 28b and 28c are engaged at the fixed shaft 24 and at the supporting member 27, is inserted into the soundproof tube 29, the supporting member 27 and the soundproof tube 29 are fitted into the winding shaft 26 by insertion, and thus, the fixed shaft 24 and other temporarily assembled parts are assembled on the winding shaft 26.

Next, an operation of this embodiment will be explained. While the pair of shoes 23 together with the garnish 22 move along the pair of guide rails 12 in the front direction, the winding shaft 26 (the supporting member 27) rotates in the one direction against the biasing force of the torsion spring 28, and thus the sheet winding apparatus 20 winds out the sheet 21 that is in a wound-up state. Thus, the roof panel 11 is covered and shaded with the sheet 21. On the other hand, the sheet winding apparatus 20 allows the winding shaft 26 (the supporting member 27) to be rotated in the opposite direction by the biasing force of the torsion spring 28, and thus the pair of shoes 23 together with the garnish 22 move along the pair of guide rails 12 in the rear direction, thereby winding up the sheet 21 that is in a wound-out state (a deployed state).

At this time, a rotation of the supporting member 27 relative to the winding shaft 26 is locked by means of the engagement of the pair of winding shaft-side fitting portions 26a and the pair of supporting member-side fitting portions 27a. On the other hand, the rotation of the soundproof tube 29 relative to the winding shaft 26 is locked because the pair of winding shaft-side fitting portions 26a engages with the pair of tube-side fitting portions 29a, and because the position-setting portion 29b is sandwiched and held between the coil portion 28a and the second spring holding portion 27d. In addition, the soundproof tube 29 is locked from moving in the axial direction in the direction closer to the fixed shaft 24 because the position-setting portion 29b is sandwiched and held between the coil portion 28a and the second spring holding portion 27d.

As described in detail above, according to the embodiment, the following effects and advantages are attained. (1) According to the embodiment, the rotation of the supporting member 27 relative to the winding shaft 26 is locked by means of the engagement of the pair of winding shaft-side fitting portions 26a and the pair of supporting member-side fitting portions 27a. This eliminates the need of, for example, a caulking process, and thus reduces manufacturing workload or restricts a reduction in a strength of the winding shaft 26 which may be caused by the caulking process. On the other hand, the rotation of the soundproof tube 29 relative to the winding shaft 26 is locked more reliably because the pair of winding shaft-side fitting portions 26a engages with the pair of tube-side fitting portions 29a, and because the position-setting portion 29b is sandwiched and held between the coil portion 28a and the second spring holding portion 27d. In addition, the soundproof tube 29 is locked from moving in the axial direction in the direction closer to the fixed shaft 24 because the position-setting portion 29b is sandwiched and held by, that is, between the coil portion 28a and the second spring holding portion 27d. Thus, in the temporarily assembled state where the outer peripheral portion of the torsion spring 28, whose leg portions 28b and 28c are engaged at the fixed shaft 24 and at the supporting member 27, is inserted into the soundproof tube 29, when the supporting member 27 and the other temporarily assembled parts are inserted and fitted into the winding shaft 26, it is restricted that the soundproof tube 29 is positionally offset in the axial direction due to deformation of the torsion spring 28 caused by expansion and contraction thereof. Consequently, assemblability improves. It is restricted that the soundproof tube 29 is positionally offset in the axial direction due to a rotation of the winding shaft 26 or due to the deformation of the torsion spring 28, and thereby it is restricted that the soundproof tube 29 is caught in and rolled in the fixed shaft 24. Consequently, it is restricted that, for example, the winding shaft 26 becomes unable to rotate.

(2) According to the embodiment, when the supporting member 27 and the soundproof tube 29 are inserted and fitted into the winding shaft 26 in the temporarily assembled state where, for example, the outer peripheral portion of the torsion spring 28 (the coil portion 28a), whose leg portions 28b and 28c are engaged at the fixed shaft 24 and at the supporting member 27, is inserted into the soundproof tube 29, the protrusions 29c come to be elastically in contact with the inner peripheral portion of the winding shaft 26. Thus, a sliding resistance while the soundproof tube 29 is being inserted and fitted into the winding shaft 26 is reduced compared to a case where, for example, an entire outer peripheral portion of the soundproof tube 29 is in contact with the inner peripheral portion of the winding shaft 26. Consequently, the assemblability improves.

(3) According to the embodiment, in order to cut the protruding configuration P, which protrudes from the soundproof tube 29 in the axial direction and defines the position-setting portion 29b, out of the extrusion molding material W, the protruding configuration P is cut out in a state where the extrusion molding material W is folded along the guiding groove 29d. Accordingly, the protruding configuration P is easily defined or formed so that the range (the angular position) at which the protruding configuration P (the position-setting portion 29b) is to be formed is not positionally offset in the circumferential direction of the soundproof tube 29.

(4) According to the embodiment, in order to assemble the supporting member 27 on the winding shaft 26, in the temporarily assembled state, for example, where the outer peripheral portion of the torsion spring 28 (the coil portion 28a) is inserted into the soundproof tube 29, the leg portion 28c of the torsion spring 28 is engaged at the supporting member 27 in a manner that the portion of the guide portion 27e, the portion whose protruding length is smaller, comes closer to the protruding configuration P that protrudes from the soundproof tube 29 in the axial direction for forming the position-setting portion 29b. While maintaining the above-explained state, the supporting member 27 is rotated about the engaging position (the locking hole 27c) of the leg portion 28c of the torsion spring 28 and the supporting member 27 in the aforementioned rotational direction, and thus the protruding configuration P positioned on the rotational path of the second spring holding portion 27d is guided by the guide portion 27e and comes to be gradually folded inwardly back in the axial direction. As the supporting member 27 rotates, the second spring holding portion 27d comes to be inserted into the coil portion 28a, and thereby the protruding configuration P is folded back in the axial direction and comes to be sandwiched and held between the coil portion 28a and the second spring holding portion 27d so as to serve as the position-setting portion 29b. Accordingly, the position-setting portion 29b is defined or formed from the protruding configuration P, and is sandwiched and held between the coil portion 28a and the second spring holding portion 27d in a smooth manner.

(5) According to the embodiment, each of the winding shaft-side fitting portions 26a, the supporting member-side fitting portions 27a and the tube-side fitting portions 29a is formed into an extremely simple planar configuration. (6) According to the embodiment, the position-setting portion 29b (the protruding configuration P) is protrudingly provided so as to correspond to the angular position of one of the tube-side fitting portions 29a. Accordingly the position-setting portion 29b is used as a mark for positioning when inserting and fitting, for example, the soundproof tube 29 into the winding shaft 26.

(7) According to the embodiment, the rotation of the soundproof tube 29 relative to the winding shaft 26 is locked. Thus, it is restricted that an unintentional gap is generated between the winding shaft 26 and the soundproof tube 29 due to the aforementioned rotation, and thus it is restricted that abnormal noises are caused by the unintentional gap. It is restricted that the winding shaft 26 and the soundproof tube 29 are closely in contact with each other, which may lead to a difficulty in the assembly.

The aforementioned embodiment may be changed as follows. The guiding groove 29d of the soundproof tube 29 may be provided at a first angular position positioned in the circumferentially central portion of the position-setting portion 29b instead of the second angular position that faces the first angular position in the radial direction. Alternatively, the guiding groove 29d may be provided at both first and second angular positions.

In the aforementioned embodiment, a configuration of fitting or engagement of the winding shaft 26, the supporting member 27 and the soundproof tube 29 is an example. For example, each of the winding shaft-side fitting portions 26a, the supporting member-side fitting portions 27a and the tube-side fitting portions 29a may be provided at one position of the winding shaft 26, the supporting member 27 and the soundproof tube 29, respectively so that corresponding fitting portions fit or engage with each other.

In the aforementioned embodiment, the sheet 21 may be wound out of the winding shaft 26 by means of an electric operation or a manual operation. In the aforementioned embodiment, the sheet winding apparatus 20 may be supported at a front edge portion of the roof opening portion 10a and the sheet 21 may be wound out toward the rear direction. Alternatively, the sheet winding apparatus 20 may be provided at, for example, a windshield G (refer to Fig. 1), a side window or a rear window.

Next, technical ideas grasped from the aforementioned embodiment and from the other examples will be described below. (A) According to the sheet winding apparatus for the vehicle of the aforementioned embodiment, the winding shaft-side fitting portion 26a is defined by forming the inner peripheral portion of the winding shaft 26 into the planar shape, the supporting member-side fitting portion 27a is defined by forming the outer peripheral portion of the supporting member 27 into the planar shape, and the tube-side fitting portion 29a is defined by forming the outer peripheral portion of the soundproof tube 29 into the planar shape. According to the aforementioned structures, each of the winding shaft-side fitting portion 26a, the supporting member-side fitting portion 27a and the tube-side fitting portion 29a is formed into the extremely simple planar configuration.

## Claims

1. A sheet winding apparatus for a vehicle, comprising:
a fixed shaft (24);
a winding shaft (26) formed into a tubular shape and rotatably supported at the fixed shaft (24), the winding shaft (26) including a winding shaft-side fitting portion (26a) provided at an inner peripheral portion of the winding shaft (26) and extending in an axial direction of the winding shaft (26);
a sheet (21) whose end portion is fixed to the winding shaft (26);
a supporting member (27) inserted into the winding shaft (26);
a torsion spring (28) including a coil portion (28a) inserted in the winding shaft (26) between the fixed shaft (24) and the supporting member (27) in the axial direction of the winding shaft (26), the torsion spring (28) including leg portions (28b, 28c) engaged with the fixed shaft (24) and with the supporting member (27) respectively, and biasing the winding shaft (26) in a winding-up direction of the sheet (21);
a soundproof tube (29) placed between the inner peripheral portion of the winding shaft (26) and an outer peripheral portion of the coil portion (28a);
a supporting member-side fitting portion (27a) formed at the supporting member (27) and engaging with the winding shaft-side fitting portion (26a), thereby locking a rotation of the supporting member (27) relative to the winding shaft (26);
a tube-side fitting portion (29a) formed at the soundproof tube (29) and engaging with the winding shaft-side fitting portion (26a), thereby locking a rotation of the soundproof tube (29) relative to the winding shaft (26);
a holding portion (27d) formed at the supporting member (27) and protruding in an axial direction of the supporting member (27) in a direction of the torsion spring (28); and
a position-setting portion (29b) provided at the soundproof tube (29) in a predetermined range in a circumferential direction of the soundproof tube (29) in a protruding manner in an axial direction of the soundproof tube (29) in a manner that the position-setting portion (29b) faces the supporting member (27), the position-setting portion (29b) being folded back in the axial direction of the soundproof tube (29) inwardly and covering an edge portion of the coil portion (28a), the position-setting portion (29b) being sandwiched and held by the coil portion (28a) and the holding portion (27d).

2. The sheet winding apparatus for the vehicle according to claim 1, further comprising:
a protrusion (29c) protrudingly provided at an outer peripheral portion of the soundproof tube (29) and being elastically in contact with the inner peripheral portion of the winding shaft (26), the protrusion (29c) being provided at other portion of the outer peripheral portion of the soundproof tube (29) than the tube-side fitting portion (29a).

3. The sheet winding apparatus for the vehicle according to either claim 1 or 2, further comprising:
a guiding groove (29d) provided at an inner peripheral portion of the soundproof tube (29) and extending in the axial direction of the soundproof tube (29), the guiding groove (29d) being provided at least one of a first angular position positioned at a central portion of the position-setting portion (29b) in the circumferential direction of the soundproof tube (29) and a second angular position facing the first angular position in a radial direction of the soundproof tube (29).

4. The sheet winding apparatus for the vehicle according to any one of claims 1 through 3, wherein the holding portion (27d) includes a guide portion (27e) of which protruding length in an axial direction of the guide portion (27e) toward the torsion spring (28) gradually decreases toward a rotational direction in which the guide portion (27e) rotates about an engaging position (27c) of the leg portion (28c) of the torsion spring (28) and the supporting member (27) to move away from the position-setting portion (29b).

5. The sheet winding apparatus for the vehicle according to any one of claims 1 through 4, wherein the sheet (21) selectively covers and uncovers a light transmitting member (11) constituting a light transmitting area of an opening portion (10a) configured to be provided at a vehicle.
